# EUROPEAN PATENT APPLICATION

(11) **EP 4 708 951 A1**
(43) Date of publication of application: **11.03.2026**
(21) Application number: 25199360.6
(22) Date of filing: 01.09.2025
(51) Int. Cl.: H04W 24/02, H04W 24/04

(54) **CELLULAR NETWORK PERFORMANCE OPTIMIZATION FOR NETWORK ELEMENTS**

(30) Priority: 03.09.2024 IN 202411066705
(71) Applicant: Nokia Solutions and Networks Oy, 02610 Espoo (FI)
(72) Inventor: Bhattacharjee, Parijat, 560048 Bangalore (IN); K, Senthil Kumaran, 560016 Bangalore (IN)
(74) Representative: Kolster Oy Ab

(57) **Abstract**

Techniques for optimizing cellular network performance of network elements of a Radio Access Network (RAN) are disclosed. In operation, Performance Metrics (PM) corresponding to a network element of the RAN are monitored, where the PM comprises a plurality of network performance indicators indicative of cellular network performance of the network element. It is then determined that a first network performance indicator from amongst the plurality of network performance indicators is meeting a predetermined condition. A performance alarm is then transmitted to a Self-Organizing Network (SON) server, where the performance alarm is indicative of at least one issue corresponding to the cellular network performance of the network element.

## Description

### BACKGROUND

Radio Access Network (RAN) is a collection of various interconnected network elements that work in tandem to facilitate exchange of information between various User Equipment (UE) coupled to such network elements. The interconnected network elements may also facilitate exchange of information between a UE and a Web Server coupled to such network elements. To facilitate exchange of information, the UEs can utilize either one or more than one network elements, such as eNodeB or gNodeB.

Network elements to be utilized for exchange of information can be identified based on different factors, such as strength of signals being received from a network element located within a communication range of a UE. For instance, when the information is to be exchanged between a first UE and a second UE, the first UE may identify a plurality of network elements located within a communication range of the first UE. The first UE may then identify a first network element with the highest received signal strength from amongst the plurality of network elements and establish a connection with the first network element. The first UE may then transmit the information to the first network element. The first network element may then identify a second network element serving the second UE and forward the information to the second network element.

### SUMMARY

According to a first aspect, there is a provided a method comprising: monitoring Performance Metrics (PM) corresponding to a network element of a Radio Access Network (RAN), wherein the PM comprises a plurality of network performance indicators indicative of cellular network performance of the network element; determining a first network performance indicator from amongst the plurality of network performance indicators to be meeting a predetermined condition; and transmitting a performance alarm to a Self-Organizing Network (SON) server, wherein the performance alarm is indicative of at least one issue corresponding to the cellular network performance of the network element.

According to some examples, the method further comprises: receiving, from the SON server, a first indication to initiate a first mitigation action at the network element in response to the at least one issue; initiating the first mitigation action in response to the at least one issue; determining that the at least one issue is resolved; and transmitting an alarm clear indication to the SON server, wherein the alarm clear indication is indicative of successful mitigation of the at least one issue.

According to some examples, the method further comprises receiving a second indication to roll back the first mitigation action.

According to some examples, the method further comprises: receiving, from the SON server, a first indication to initiate a first mitigation action at the network element in response to the at least one issue; initiating the first mitigation action in response to the at least one issue; determining that the at least one issue is not resolved; transmitting a partial alarm clear indication to the SON server, wherein the partial alarm clear indication is indicative of partial mitigation of the at least one issue; and receiving a third indication to initiate a second mitigation action in response to the at least one issue.

According to some examples, the method comprises configuring the performance alarm prior to monitoring the PM corresponding to the network element, wherein the configuring the performance alarm comprises: receiving an alarm configuration request at the network element, wherein the alarm configuration request is to configure the network element to transmit the performance alarm upon determining the first network performance indicator to be meeting a predetermined condition, and wherein the alarm configuration request comprises alarm configuration parameters for configuring the performance alarm; configuring the network element to transmit the performance alarm based on the alarm configuration request; and transmitting, to the SON server, an alarm configuration response comprising an alarm ID corresponding to the performance alarm.

According to some examples, the method comprises: analyzing at least one performance counter corresponding to the first network performance indicator to determine that the first network performance indicator is meeting the predetermined condition, and wherein the alarm configuration parameters comprises at least one of a name of the performance alarm, identifiers of the at least one performance counter, first alarm criteria to be monitored against the at least one performance counter to trigger the performance alarm, an evaluation duration indicating the duration for which the first alarm criteria is to be monitored, a second alarm criteria to be monitored against the at least one performance counter to clear the performance alarm, a frequency for reporting the performance alarm, a first schedule indicating a period for monitoring at least one of the first alarm criteria and the second alarm criteria, and an alarm type indicating criticality of the performance alarm.

According to a second aspect, there is provided a method comprising: receiving, from a network element of a Radio Access Network (RAN), a performance alarm indicative of at least one issue corresponding to cellular network performance of the network element; analyzing the performance alarm to identify a first mitigation action to be initiated for resolving the at least one issue; and transmitting, to the network element, a first indication of the first mitigation action.

According to some examples, the method further comprises: receiving an alarm clear indication from the network element, wherein the alarm clear indication is indicative of successful mitigation of the at least one issue; and transmitting, to the network element, a second indication to roll back the first mitigation action.

According to some examples, the method further comprises: receiving a partial alarm clear indication from the network element, wherein the partial alarm clear indication is indicative of partial mitigation of the at least one issue; and transmitting, to the network element, a third indication of a second mitigation action to be initiated for resolving the at least one issue.

According to some examples, the method comprises configuring the performance alarm prior to receiving the performance alarm, wherein configuring the performance alarm comprises: transmitting, to the network element, an alarm configuration request to configure the network element to raise the performance alarm upon detecting that a first network performance indicator from a plurality of network performance indicators corresponding to the network element is meeting a predetermined condition and comprises alarm configuration parameters for setting up the performance alarm, wherein the plurality of network performance indicators is indicative of the cellular network performance of the network element; and receiving, from the network element, an alarm configuration response comprising an alarm ID corresponding to the performance alarm configured at the network element.

According to a third aspect, there is provided a network element comprising: at least one processor and at least one memory storing instructions that, when executed by the at least one processor, cause the network element at least to: monitor Performance Metrics (PM) corresponding to a network element of a Radio Access Network (RAN), wherein the PM comprises a plurality of network performance indicators indicative of cellular network performance of the network element; determine a first network performance indicator from amongst the plurality of network performance indicators to be meeting a predetermined condition; and transmit a performance alarm to a Self-Organizing Network (SON) server, wherein the performance alarm is indicative of at least one issue corresponding to the cellular network performance of the network element.

According to some examples, the at least one processor further causes the network element to: receive, from the SON server, a first indication to initiate a first mitigation action at the network element in response to the at least one issue; initiate the first mitigation action in response to the at least one issue; determine that the at least one issue is resolved; and transmit an alarm clear indication to the SON server, wherein the alarm clear indication is indicative of successful mitigation of the at least one issue.

According to some examples, the at least one processor causes the network element to receive a second indication to roll back the first mitigation action.

According to some examples, the at least one processor further causes the network element to: receive, from the SON server, a first indication to initiate a first mitigation action at the network element in response to the at least one issue; initiate the first mitigation action in response to the at least one issue; determine that the at least one issue is not resolved; transmit a partial alarm clear indication to the SON server, wherein the partial alarm clear indication is indicative of partial mitigation of the at least one issue; and receive a third indication to initiate a second mitigation action in response to the at least one issue

According to some examples, the at least one processor causes the network element to configure the performance alarm prior to monitoring the PM corresponding to the network element, and wherein to configure the performance alarm, the at least one processor further causes the network element to: receive an alarm configuration request at the network element, wherein the alarm configuration request is to configure the network element to transmit the performance alarm upon determining the first network performance indicator meeting a predetermined condition, and wherein the alarm configuration request comprises alarm configuration parameters for configuring the performance alarm; configure the network element to transmit the performance alarm based on the alarm configuration request; and transmit, to the SON server, an alarm configuration response comprising an alarm ID corresponding to the performance alarm.

According to some examples, the at least one processor causes the network element to: analyze at least one performance counter corresponding to the first network performance indicator to determine that the first network indicator is meeting the predetermined condition, and wherein the alarm configuration parameters comprises at least one of a name of the performance alarm, identifiers of at least one performance counter, first alarm criteria to be monitored against the at least one performance counter to trigger the performance alarm, an evaluation duration indicating the duration for which the first alarm criteria is to be monitored, a second alarm criteria to be monitored against the at least one performance counter to clear the performance alarm, a frequency for reporting the performance alarm, a first schedule indicating a period for monitoring at least one of the first alarm criteria and the second alarm criteria, and an alarm type indicating criticality of the performance alarm.

According to a fourth aspect, there is provided a Self-Optimizing Network (SON) Server comprising: at least one processor and at least one memory storing instructions that, when executed by the at least one processor, cause the SON server at least to: receiving, from a network element of a Radio Access Network (RAN), a performance alarm indicative of at least one issue corresponding to cellular network performance of the network element; analyzing the performance alarm to identify a first mitigation action to be initiated for resolving the at least one issue; and transmitting, to the network element, a first indication of the first mitigation action.

According to some examples, the at least one processor causes the SON server to: receive an alarm clear indication from the network element, wherein the alarm clear indication is indicative of successful mitigation of the at least one issue; and transmit, to the network element, a second indication to roll back the first mitigation action.

According to some examples, the at least one processor causes the SON server to: receive a partial alarm clear indication from the network element, wherein the partial alarm clear indication is indicative of partial mitigation of the at least one issue; and transmit, to the network element, a third indication of a second mitigation action to be initiated for resolving the at least one issue.

According to some examples, the at least one processor causes the SON server to configure the performance alarm prior to receiving the performance alarm, and wherein to configure the performance alarm, the at least one processor causes the SON server to: transmit, to the network element, an alarm configuration request to the network element, wherein the alarm configuration request is to configure the network element to raise the performance alarm upon detecting that a first network performance indicator from a plurality of network performance indicators corresponding to the network element is meeting a predetermined condition and comprises alarm configuration parameters for setting up the performance alarm, wherein the plurality of network performance indicators is indicative of the cellular network performance of the network element; and receive, from the network element, an alarm configuration response comprising an alarm ID corresponding to the performance alarm configured at the network element.

### BRIEF DESCRIPTION OF DRAWINGS

Fig. 1 illustrates a cellular network for facilitating optimization in cellular network performance of a network element, in accordance with an example of the present subject matter,
Fig. 2 illustrates schematics of the network element, in accordance with an example of the present subject matter,
Fig. 3 illustrates a call flow for facilitating optimization in cellular network performance of the network element, in accordance with an example of the present subject matter,
Fig. 4 illustrates a call flow for facilitating optimization in cellular network performance of the network element, in accordance with another example of the present subject matter,
Fig. 5 illustrates a method for optimization in cellular network performance of the network element, in accordance with an example of the present subject matter,
Fig. 6 illustrates a method for optimization in cellular network performance of the network element, in accordance with another example of the present subject matter, and
Fig. 7 illustrates a non-transitory computer-readable medium for optimization in cellular network performance of the network element, in accordance with an example of the present subject matter,

Throughout the drawings, identical reference numbers designate similar, but not necessarily identical, elements. The drawings provide examples and/or implementations consistent with the description; however, the description is not limited to the examples and/or implementations provided in the drawings.

### DETAILED DESCRIPTION

To optimize the resource utilization and cellular network performance corresponding to various network elements included in the RAN, a Self-Organizing Network (SON) server is utilized. The SON server receives performance metrics from the various network elements included in the RAN repeatedly, analyzes the performance metrics using various Artificial Intelligence/ Machine Learning (Al/ML) based algorithms to identify potential issues affecting the cellular network performance of the network elements, identifies mitigation actions for resolving such potential issues, and implements such mitigation actions at the network elements for resolving such potential issues. For instance, in an example, the SON server may receive and analyze performance metrics from a first network element and a neighbor network element of the first network element. Based on the analysis of the performance metrics received from the first network element and the neighbor network element, the SON server may identify that the number of UEs connected to the first network element are higher than the threshold while the number of UEs connected to the neighbor network element is below the threshold. In such a situation, the SON server may notify the first network element to initiate a handover operation to offload the first UE, along with other UEs, to the neighbor network element. In this manner, the SON server facilitates optimization of resource utilization and the cellular network performance corresponding to the first network element and the neighbor network element, without entailing communication between the first network element and the neighbor network element for identifying if the handover operation would result in optimization of resource utilization.

While the SON server facilitates optimization of resource utilization of the various network elements included in the RAN, the SON server relies on analysis of performance metrics received from various network elements for identifying potential issues affecting the cellular network performance of the network elements and mitigation actions for resolving such potential issues. Further, the transmission of the performance metrics from the various network elements to the SON server involves routing the performance metrics via an Element Management System (EMS). Moreover, when the performance metrics are transmitted from the various network elements to the SON server, the performance metrics undergo processing at each hop enroute the SON server. For instance, the performance metrics are first processed at the network element upon generation followed by a subsequent processing at the EMS. Such repeated processing of the performance metrics introduces latency in transmission of the performance metrics from the network elements to the SON server.

Moreover, in several situations, the issue affecting the cellular network performance of the network elements may not persist for the time duration in which the SON server receives and analyzes the performance metrics and determines the first mitigation action to resolve the issue. Examples of such situations include transient real-life events, such as traffic jams, rallies, and sports events. In such situations, the issue affecting the cellular network performance of the network elements may be over by the time the SON server receives and analyses the performance metrics to identify the potential issue and the first mitigation action for resolving the potential issue. For instance, a traffic jam may be created by a vehicle breakdown on a road. In such a situation, a network element, such as a gNodeB serving the UEs present in other vehicles stuck in the traffic jam, may send the performance metrics to the SON server. The SON server may analyze the performance metrics to identify the potential issues and mitigation actions to be initiated for resolving the potential issues. The SON server may then transmit an indication of the first mitigation action to the network element. However, while the performance metrics are transmitted from the network element and analyzed by the SON server to identify the potential issue and the corresponding mitigation action, the vehicle that suffered the breakdown may be towed away and the traffic jam may be over.

According to examples of the present subject matter, techniques for optimizing cellular network performance of network elements of a Radio Access Network (RAN) are disclosed.

In an example, Performance Metrics (PM) corresponding to a network element of a Radio Access Network (RAN) are monitored. The PM comprise a plurality of network performance indicators indicative of cellular network performance of the network element. A first network performance indicator from amongst the plurality of network performance indicators is then determined to be meeting a predetermined condition. In response to the determination, a performance alarm is transmitted to a Self-Organizing Network (SON) server, where the performance alarm is indicative of at least one issue corresponding to the cellular network performance of the network element.

In an example, upon receiving the performance alarm, the SON server analyzes the performance alarm to identify a first mitigation action to be initiated for resolving the at least one issue. Subsequently, the SON server transmits a first indication to initiate the first mitigation action at the network element for resolving the at least one issue.

By utilizing the performance alarms to intimate the SON server about the issues related to cellular network performance of the network elements instead of the performance metrics, the latency associated with transmission and analysis of the performance metrics at each hop enroute the SON server is reduced. As a result, the latency involved in intimation of the issues related to the cellular network performance of the network elements to the SON server and receiving an indication of mitigation actions to be initiated in response to the issues is reduced.

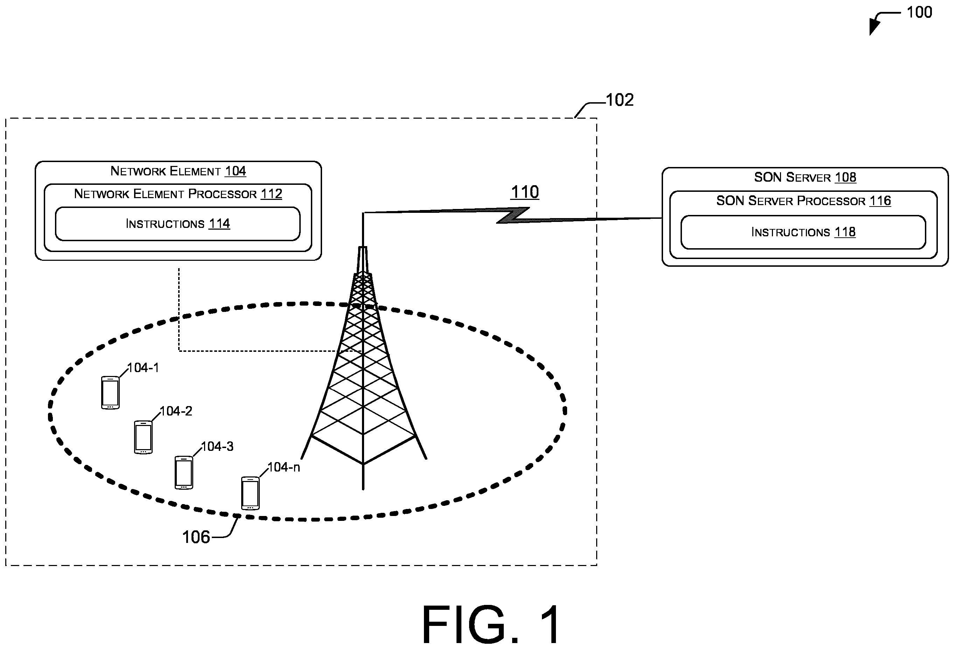

The manner in which the example network elements and the SON server are implemented is explained in detail with respect to Fig. 1 to Fig. 7. While aspects of the described network elements and the SON server may be implemented in any number of different electronic devices, environments, and/or implementations, the examples are described in the context of the following example device(s). It is to be noted that drawings of the present subject matter shown here are for illustrative purposes and are not to be construed as limiting the scope of the subject matter claimed.

Fig. 1 illustrates a cellular network 100 for facilitating optimization in cellular network performance of a network element, in accordance with an example of the present subject matter. Examples of the cellular network 100 may comprise, but are not limited to, Long Term Evolution (LTE) network and 5^{th} Generation New Radio (5G-NR) network.

The cellular network 100 may include a Radio Access Network (RAN) 102. Examples of RAN 102 may vary based on a type of the cellular network. For instance, when the cellular network is LTE or LTE-Advanced (LTE-A) network, the RAN 102 may be Evolved Universal Terrestrial Radio Access Network (E-UTRAN). On the other hand, when the cellular network is 5G-NR, the RAN 102 may be Next Generation RAN (NG-RAN).

The RAN 102 may include a network element 104 and a plurality of User Equipment (UE) 104-1, 104-2, 104-3, ..., 104-n served by the network element 104. In an example, the network element 104 may have an associated range of communication 106 which is a geographical area covered by signals emitted by the network element 104. In the example, the plurality of UE 104-1, 104-2, 104-3, ..., 104-n being served by the network element 104 may be located within the associated range of communication 106. Examples of the network element 104 may vary based on a type of the cellular network. For instance, when the cellular network is LTE network, the network element 104 may be Evolved NodeB (eNB). On the other hand, when the cellular network is 5G-NR, the network element 104 may be Next Generation NodeB (gNB).

The cellular network 100 may further include a Self-Optimizing Network (SON) server 108 coupled to the network element 104. The SON server 108 may be coupled to the network element 104 via a communication link 110. In an example, the communication link 110 may be a direct communication link between the network element 104 and the SON server 108. In another example, the communication link 110 may be an indirect communication link and may include one or more management systems, such as an Element Management System (EMS) (not shown) or Network Management System (NMS) (not shown), between the network element 104 and the SON server 108.

Further, the SON server 108 may be implemented in different ways. In an example, the SON server 108 may be implemented on a standalone computer. In another example, the SON server 108 may be implemented on a network of distributed computing devices working interdependently. In yet another example, the SON server 108 may be implemented as a virtual machine operating on a virtual server in a cloud.

Further, the network element 104 may comprise a network element processor 112. The network element processor 112 may fetch and execute the computer-readable instructions 114 stored in a memory (not depicted in FIG. 1), to facilitate optimization of cellular network performance of the network element 104, amongst other functions. Further, the SON server 108 may comprise a SON server processor 116. The SON server processor 116 may fetch and execute the computer-readable instructions 118 stored in a memory (not depicted in FIG. 1), to facilitate optimization of cellular network performance of the network element 104, amongst other functions.

In operation, the network element processor 112 may monitor Performance Metrics (PM) corresponding to the network element 104. The PM may include a plurality of network performance indicators indicative of cellular network performance of the network element. In an example, each of the plurality of network performance indicators may be derived based on one or more performance counters corresponding to the network element.

While monitoring the PM, the network element processor 112 may determine that a first network performance indicator from amongst the plurality of network performance indicators is meeting a predetermined condition. In such a situation, the network element processor 112 may cause the network element 104 to transmit a performance alarm to the SON server 108, where the performance alarm is indicative of at least one issue corresponding to the cellular network performance of the network element. In an example, the network element processor 112 may cause the network element 104 to transmit the performance alarm via the communication link 110.

The SON server processor 116 may then cause the SON server 108 to receive the performance alarm from the network element 104. The SON server processor 116 may then analyze the performance alarm to identify a first mitigation action to be initiated for resolving the at least one issue. Once the first mitigation action is identified, the SON server processor 116 may cause the SON server 108 to transmit a first indication of the first mitigation action to the network element 104.

The network element processor 112 may then cause the network element 104 to receive the first indication and initiate the first mitigation action in response to the at least one issue to optimize the cellular network performance of the network element 104. The manner in which the cellular network performance of the network element 104 is optimized is further explained in conjunction with the forthcoming figures.

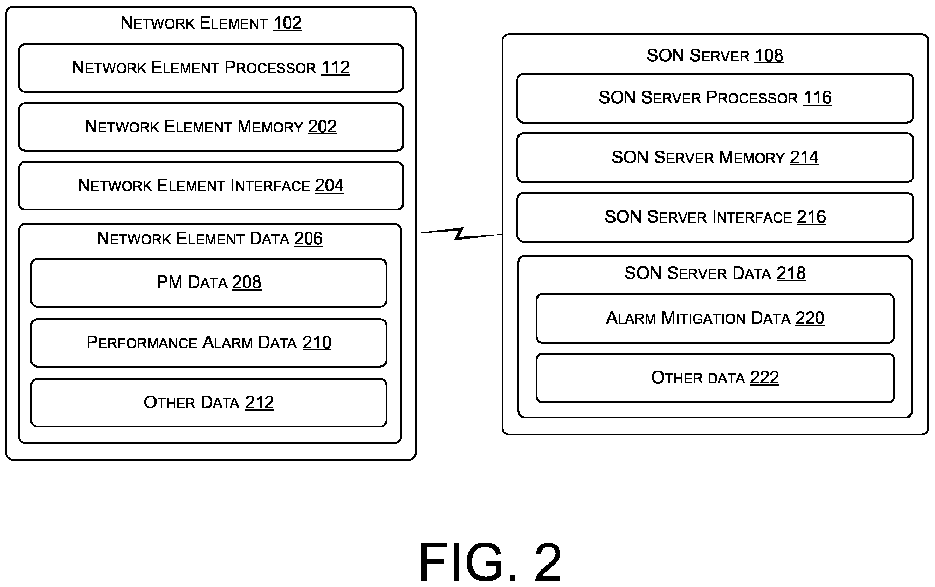

Fig. 2 illustrates schematics of the network element 104, in accordance with an example of the present subject matter. In an example, the network element 104 may be communicatively coupled to the SON server 108.

The network element 104 may comprise the network element processor 112, a network element memory 202, and a network element interface 204 coupled to the network element memory 202. The functions of various elements shown in the figs., including any functional blocks labelled as "network element processor", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly comprise, without limitation, digital signal processor (DSP) hardware, network processor, application specific integrated circuit (ASIC), field programmable gate array (FPGA). Other hardware, standard and/or custom, may also be coupled to the network element processor.

The network element memory 202 may be a computer-readable medium, examples of which comprise volatile memory (e.g., RAM), and/or non-volatile memory (e.g., Erasable Programmable read-only memory, i.e., EPROM, flash memory, etc.). The network element memory 202 may be an external memory, or internal memory, such as a flash drive, a compact disk drive, an external hard disk drive, or the like. The network element memory 202 may further comprise data which either may be utilized or generated during the operation of the network element 104.

The network element interface 204 may allow the connection or coupling of the network element with one or more other devices, through a wired (e.g., Local Area Network, i.e., LAN) connection or through a wireless connection (e.g., Bluetooth^{®}, WiFi). The network element interface 204 may also enable intercommunication between different logical as well as hardware components of the network element.

The network element 104 may further comprise network element data 206 that may be utilized or generated by the network element processor 112 while performing a variety of functions. In an example, the network element data 206 comprises PM data 208, performance alarm data 210, and other data 212. The other data 212, amongst other things, may serve as a repository for storing data that is processed, or received, or generated as a result of the execution of the instructions by the network element processor 112. In an example, the network element data 206 may be stored in the network element memory 202.

Turning to the SON server 108, the SON server 108 may comprise the SON server processor 116, a SON server memory 214, and a SON server interface 216 coupled to the SON server memory 214. The functions of various elements shown in the figs., including any functional blocks labelled as "SON server processor", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly comprise, without limitation, digital signal processor (DSP) hardware, network processor, application specific integrated circuit (ASIC), field programmable gate array (FPGA). Other hardware, standard and/or custom, may also be coupled to the SON server processor.

The SON server memory 214 may be a computer-readable medium, examples of which comprise volatile memory (e.g., RAM), and/or non-volatile memory (e.g., Erasable Programmable read-only memory, i.e., EPROM, flash memory, etc.). The SON server memory 214 may be an external memory, or internal memory, such as a flash drive, a compact disk drive, an external hard disk drive, or the like. The SON server memory 214 may further comprise data which either may be utilized or generated during the operation of the SON server 108.

The SON server interface 216 may allow the connection or coupling of the SON server with one or more other devices, through a wired (e.g., Local Area Network, i.e., LAN) connection or through a wireless connection (e.g., Bluetooth^{®}, WiFi). The SON server interface 216 may also enable intercommunication between different logical as well as hardware components of the SON server 108.

The SON server 108 may further comprise SON server data 218 that may be utilized or generated by the SON server processor 116 while performing a variety of functions. In an example, the SON server data 218 comprises alarm mitigation data 220 and other data 222. The other data 222, amongst other things, may serve as a repository for storing data that is processed, or received, or generated as a result of the execution of the instructions by the SON server processor 116. In an example, the SON server data 218 may be stored in the SON server memory 214.

In operation, the SON server processor 116 may cause the SON server 108 to transmit an alarm configuration request to the network element 104. The SON server processor 116 may cause the SON server 108 to transmit the alarm configuration request for configuring the network element 104 to raise the performance alarm upon determining the first network performance indicator to be meeting the predetermined condition.

The alarm configuration request may include alarm configuration parameters for configuring the performance alarm. The alarm configuration parameters may include at least one of: a name of the performance alarm, identifiers of the one or more performance counters that corresponds to the first network performance indicator, the predetermined condition for triggering the performance alarm, an evaluation duration indicating the duration for which the first alarm criteria are to be monitored, a frequency for reporting the performance alarm, a first schedule indicating a period for monitoring at least one of the first alarm criteria and the second alarm criteria, and an alarm type indicating criticality of the performance alarm.

In an example, the network element processor 112 may then cause the network element 104 to receive the alarm configuration request. Thereafter, the network element processor 112 may configure the performance alarm based on the alarm configuration request. The network element processor 112 may then store the configured performance alarm in the performance alarm data 210. Subsequently, the network element processor 112 may transmit an alarm configuration response to the SON server 108, where the alarm configuration response may include an alarm ID corresponding to the performance alarm.

In an example, the SON server processor 116 may configure a plurality of performance alarms for the network element 104 in the manner described above. Once the plurality of performance alarms has been set up, the SON server processor 116 may transmit an alarm subscription request to the network element. The SON server processor 116 may transmit the alarm subscription request to the network element 104 to subscribe to a first set of performance alarms from the plurality of performance alarms. The alarm subscription request may include alarm IDs corresponding to the first set of performance alarms. In an example, the SON server processor 116 may identify the first set of performance alarms for the network element 104 based on empirical cellular network performance data of the network element 104. For instance, if the empirical cellular network performance data indicates that the network element 104 is more likely to experience high cell load and high call drop rates, the SON server processor 116 may subscribe to the set of performance alarms that correspond to the network performance indicators indicative of cell load and call drops at the network element 104. In the example, the network element processor 112 may then cause the network element to receive the alarm subscription request and begin monitoring the network performance indicators corresponding to the first set of performance alarms.

Once the performance alarm is configured at the network element 104, the network element processor 112 may begin monitoring the PM corresponding to the network element. As already described, the PM may include a plurality of network performance indicators, where each of the plurality of network performance indicators may be derived based on one or more performance counters corresponding to the network element. In an example, the network element processor 112 may monitor a first set of network performance indicators from amongst the plurality of network performance indicators, i.e. the first set of performance alarms that have been subscribed to by the SON server 108.

The network element processor 112 may monitor the plurality of network performance indicators to determine if the first network performance indicator is meeting the predetermined condition. In an example, the network element processor 112 may monitor the plurality of network performance indicators based on the first schedule.

To determine that the first network performance indicator is meeting the predetermined condition, the network element processor 112 may identify one or more performance counters corresponding to the first network performance indicator based on the identifier of the one or more performance counters. The network element processor 112 may then derive the first network performance indicator based on the one or more performance counters and store the first network performance indicator in the performance alarm data 210. The network element processor 112 may then determine if the first performance indicator is meeting the predetermined condition. If it is determined that the first network performance indicator is meeting the predetermined condition, the network element processor 112 may cause the network element 104 to transmit the performance alarm. In another example, the network element processor 112 may cause the network element 104 to transmit the performance alarm when the first alarm criteria are met for the evaluation duration. In either case, the performance alarm may include an alarm ID corresponding to the performance alarm.

The network element processor 112 may repeatedly transmit the performance alarm until a response to the performance alarm is received from the SON server 108. The network element processor 112 may transmit the alarm based on the frequency for reporting the performance alarm. The network element processor 112 may also consider the alarm type while transmitting the performance alarm. For instance, if the network element processor 112 identifies that multiple performance alarms are to be simultaneously transmitted to the SON server 108, the network element processor 112 may transmit a performance alarm with higher criticality than the other performance alarms, before transmitting the other performance alarms.

In an example, the SON server processor 116 may then cause the SON server 108 to receive the performance alarm from the network element 104. In the example, the performance alarm may include the alarm ID corresponding to the performance alarm and last 'n' values of the one or more performance counters. The SON server processor 116 may then analyze the performance alarm to identify a first mitigation action to be initiated for resolving the at least one issue corresponding to the cellular network performance of the network element. Thereafter, the SON server processor 116 may then cause the SON server 108 to transmit a first indication of the first mitigation action to the network element 104.

In an example, to identify the first mitigation action to be initiated for resolving the at least one issue, the SON server processor 116 may utilize an issue resolution data structure including alarm IDs corresponding to a plurality of performance alarms and a plurality of mitigation actions to be initiated in response to each of the plurality of performance alarms. Further, for each performance alarm, the issue resolution data structure may also classify a first mitigation action from the plurality of mitigation actions that is to be initiated in response to a performance alarm based on the last 'n' values of the one or more performance counters. The issue resolution data structure may be stored in the alarm mitigation data 220. The SON server processor 116 may query the issue resolution data structure using the alarm ID corresponding to the performance alarm and the last 'n' values of the one or more performance counters to identify a first mitigation action from the plurality of mitigation actions that is to be initiated in response to a performance alarm.

The network element processor 112 may then cause the network element 104 to receive the first indication of the first mitigation action. Thereafter, the network element processor 112 may cause the network element 104 to initiate the first mitigation action to resolve the at least one issue corresponding to the cellular network performance of the network element 104.

In an example, upon initiation of the first mitigation action at the network element 104, the at least one issue may be resolved successfully. In the example, the network element processor 112 may cause the network element 104 to transmit an alarm clear indication to the SON server 108, where the alarm clear indication is indicative of successful mitigation of the at least one issue. The SON server processor 116 may then cause the SON server 108 to receive the alarm clear indication from the network element 104. In response to the alarm clear indication, the SON server processor 116 may cause the SON server 108 to transmit a second indication to roll back the first mitigation action at the network element 104. The network element processor 112 may then cause the network element to receive the second indication and initiate rollback of the first mitigation action. In an example, the rollback of the first mitigation action may include reversal of a parameter change that may have been initiated as a part of the first mitigation action.

In another example, upon initiation of the first mitigation action at the network element 104, the at least one issue may not be resolved successfully. In the example, the network element processor 112 may cause the network element 104 to transmit a partial alarm clear indication to the SON server 108, where the partial alarm clear indication is indicative of partial mitigation of the at least one issue at the network element 104. The partial alarm clear indication may include last 'n' values of the one or more performance counters recorded after initiation of the first mitigation action corresponding to the first indication. The SON server processor 116 may then cause the SON server 108 to receive the partial alarm clear indication from the network element 104. In response to the partial alarm clear indication, the SON server processor 116 may identify a second mitigation action from the plurality of mitigation actions that is initiated for the successful mitigation of the at least one issue. The SON server processor 116 may then cause the SON server 108 to transmit a third indication to the network element 104 for initiating the second mitigation action.

The network element processor 112 may then cause the network element 104 to receive the third indication and initiate the second mitigation action. In an example, once the at least one issue is resolved, the network element processor 112 may cause the network element 104 to transmit the alarm clear indication to the SON server 108. In the example, in response to the alarm clear indication, the SON server processor 116 may cause the SON server 108 to transmit a fourth indication to roll back the first mitigation action and the second mitigation action. The network element processor 112 may then cause the network element 104 to receive the fourth indication and initiate rollback of the first mitigation action and the second mitigation action.

Although it has been described that the at least one issue is resolved after initiation of the second mitigation action on the network element 104, it would be noted that, in several situations, the at least one issue may not be resolved even after initiation of the second mitigation action. In such situations, the network element processor 112 may cause the network element 104 to repeatedly transmit the partial alarm clear indications to the SON server 108 until the at least one issue is resolved.

In an illustrative example, a network element, such as the network element 104, serving a busy urban area may be configured with a performance alarm related to cell load. In the example, the alarm configuration parameters may include:
Alarm name: "High Cell Load",
Performance counter(s): "Average number of connected users"
Predetermined condition: Average number of connected users > Two hundred for 15 minutes
Evaluation duration: 15 minutes
Reporting frequency: Every 5 minutes while condition persists
First Schedule: 8:00 AM to 11:00 AM, Monday-Friday
Alarm type: Critical

During a typical workday, the network element 104 monitors its performance metrics. At 9:00 AM, it detects that the average number of connected users has exceeded two hundred and remains above the threshold for 15 minutes. The network element 104 then transmits a performance alarm to the SON server 108 with the alarm ID and the last 5 values of the "Average number of connected users" counter. The SON server 108 may receive and analyse the performance alarm. Based on the analysis, the SON server 108 may determine that a suitable mitigation action is to adjust the cell's coverage area. In an example, the reduction in coverage area may lead to improvement in Quality of Service (QoS) for the plurality of UEs 104-1, 104-2, 104-3, ..., 104-nd within the range of communication 106 while forcing the UEs located at boundary regions of the range of communication 106 to connect to neighbouring network elements. The SON server 108 may send a first indication to the network element 104 to reduce its transmission power by 2 decibels (dB).

The network element 104 may receive the first indication and reduce the transmission power by 2 dB. Over the next 30 minutes, the network element 104 may observe that the average number of connected users drops below two hundred. The network element 104 may accordingly send an alarm clear indication to the SON server 108. Upon receiving the alarm clear indication, the SON server 108 may send a second indication to the network element 104 to gradually increase the transmission power back to the original level over the next hour, to avoid sudden changes in network coverage.

The SON server processor 116 may further cause the SON server 108 to transmit an alarm modification request to the network element 104 for modification of existing performance alarms. The modification of the existing performance alarms may include modification of an alarm configuration parameters for an existing performance alarm or deletion of the existing performance alarm. The alarm modification request may include the alarm ID of the existing performance alarm. Further, in situations where the alarm configuration parameters for the existing performance alarm are to be modified, the alarm modification request may include modified alarm configuration parameters, in addition to the alarm ID. In the example, the network element processor 112 may cause the network element 104 to receive the alarm modification request. The network element processor 112 may then cause the network element 104 to modify the existing performance alarm based on the alarm modification request.

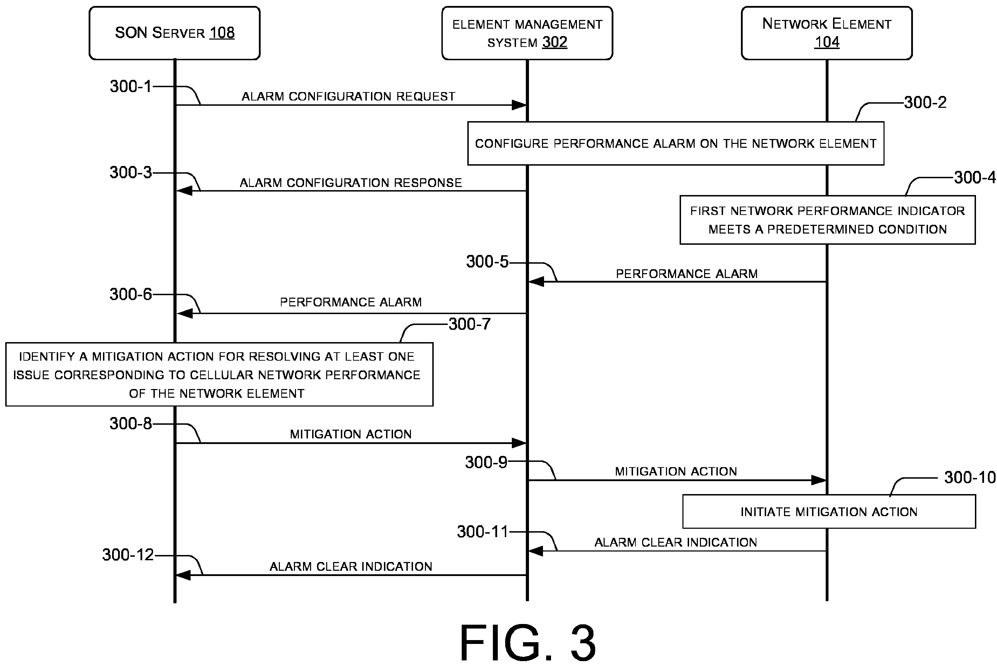

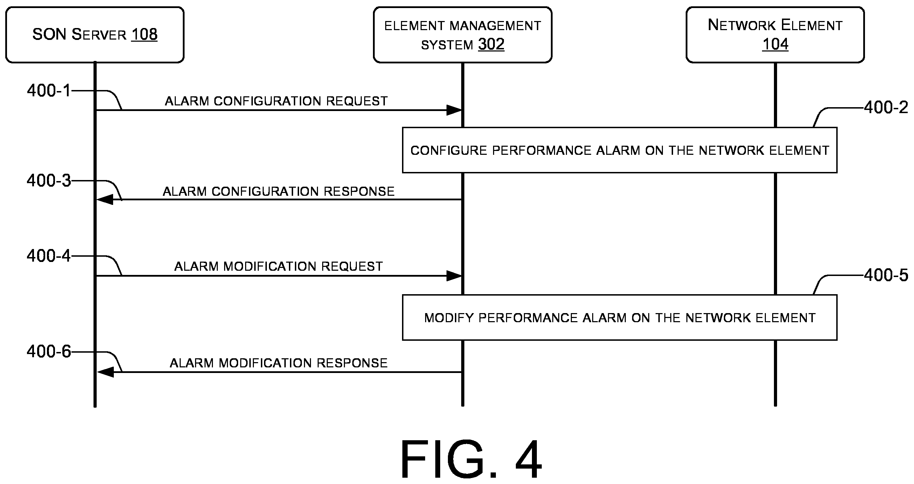

Figs. 3 and 4 illustrate call flows for facilitating optimization of cellular network performance of the network element, in accordance with an example of the present subject matter. As illustrated in the call flows, the SON server 108 and the network element 104 may communicate through an EMS 302. In an example, the EMS 302 may be placed between the network element 104 and the SON server 108 and may perform Fault Management (FM), Configuration Management (CM), and Performance Management (PM) for the network element 104.

The EMS 302 may communicate with the network element 104 through an EMS-NE interface. Examples of the EMS-NE interface may include, but are not limited to, Simple Network Management Protocol (SNMP) for retrieving performance data and alarms from network elements; Command Line Interface (CLI) for configuration management and troubleshooting of network elements; Network Configuration Protocol (NETCONF) for configuration and operational state management; TL1 (Transaction Language 1) commands for managing telecommunications network elements; and Common Object Request Broker Architecture (CORBA) for object-oriented communication between the EMS and network elements.

Further, the EMS 302 may communicate with the SON server 108 through a SON-EMS interface. Examples of the SON-EMS interface may include, but are not limited to, RESTful API for the SON server to retrieve network performance data, alarms, and configuration information from the EMS; SOAP-based web services enabling the SON server to request configuration changes on network elements through the EMS; Publish/subscribe message queue for the EMS to stream real-time network events and alarms to the SON server; NETCONF interface for the SON server to manage network configurations through the EMS using standardized data models; and Advanced Message Queuing Protocol (AMQP) for reliable message exchange between SON server and EMS.

In fig. 3, at step 302-1, the SON server 108 may transmit the alarm configuration request to the EMS 302. The alarm configuration request may include the alarm configuration parameters for configuring the performance alarm. The alarm configuration parameters may include at least one of: a name of the performance alarm, identifiers of the one or more performance counter that corresponds to the first network performance indicator, the predetermined condition for triggering the performance alarm, an evaluation duration indicating the duration for which the first alarm criteria is to be monitored, a frequency for reporting the performance alarm, a first schedule indicating a period for monitoring at least one of the first alarm criteria and the second alarm criteria, an alarm type indicating criticality of the performance alarm, and last 'n' values of the one or more performance counters.

At step 300-2, the EMS 302 may configure the network element to transmit the performance alarm based on the alarm configuration parameters. At step 300-3, the EMS 302 may transmit an alarm configuration response to the SON server 108, where the alarm configuration response may include an alarm ID corresponding to the configured performance alarm.

In an example, once the network element 104 has been configured to transmit the performance alarm, the network element 104 may begin monitoring the PM indicated by the plurality of network performance indicators to determine if the first network performance alarm is meeting the predetermined condition. In an example, the plurality of network performance indicators may be indicated by the plurality of performance counters corresponding to the network element. In the example, to determine if the first network performance indicator is meeting the predetermined condition, the network element 104 may identify the one or more performance counters corresponding to the first network performance indicator and derive the first network performance indicator based on the one or more performance counters. The network element 104 may then determine if the first network performance indicators is meeting the predetermined condition.

At step 300-4, the network element 104 may determine that the first network performance alarm meets the predetermined condition. Accordingly, at step 300-5, the network element 104 may transmit the performance alarm to the EMS 302. In an example, the performance alarm may include an alarm ID corresponding to the performance alarm. Thereafter, at step 300-6, the EMS 302 may transmit the performance alarm to the SON server 108.

At step 300-7, the SON server 108 may identify a first mitigation action to be initiated for resolving the at least one issue corresponding to the cellular network performance of the network element. In an example, to identify the first mitigation action to be initiated for resolving the at least one issue, the SON server 108 may query the issue resolution data structure using the alarm ID corresponding to the performance alarm and the last 'n" values of the one or more performance counters.

At step 300-8, the SON server 108 may transmit a first indication of a first mitigation action to the EMS 302. At step 300-9, the EMS 302 may transmit the first indication of the first mitigation action to the network element 104.

At step 300-10, the network element 104 may initiate the first mitigation action to resolve the at least issue corresponding to the cellular network performance of the network element. Thereafter, at step 300-11, the network element 104 may transmit the alarm clear indication to the EMS 302. At step 300-12, the EMS 302 may transmit the alarm clear indication to the SON server 108. In an example, upon receiving the alarm clear indication, the SON server 108 may transmit a second indication for rollback of the first mitigation action at the network element 104.

In fig. 4, at step 400-1, the SON server 108 may transmit the alarm configuration request to the EMS 302. The alarm configuration request may include the alarm configuration parameters for configuring the performance alarm. The alarm configuration parameters may include at least one of: a name of the performance alarm, identifiers of the one or more performance counter that corresponds to the first network performance indicator, the predetermined condition for triggering the performance alarm, an evaluation duration indicating the duration for which the first alarm criteria is to be monitored, a frequency for reporting the performance alarm, a first schedule indicating a period for monitoring at least one of the first alarm criteria and the second alarm criteria, an alarm type indicating criticality of the performance alarm, and last 'n' values of the one or more performance counters.

At step 400-2, the EMS 302 may configure the network element to transmit the performance alarm based on the alarm configuration parameters. At step 400-3, the EMS 302 may transmit an alarm configuration response to the SON server 108, where the alarm configuration response may include an alarm ID corresponding to the configured performance alarm.

At step 400-4, the SON server 108 may transmit an alarm modification request to the EMS 302. In an example, the SON server 108 may transmit the alarm modification request for modification of existing performance alarms. In the example, the modification of the existing performance alarms may include modification of an alarm configuration parameters for an existing performance alarm or deletion of the existing performance alarm. The alarm modification request may include the alarm ID of the existing performance alarm. Further, in situations where the alarm configuration parameters for the existing performance alarm is to be modified, the alarm modification request may include modified alarm configuration parameters, in addition to the alarm ID. At step 400-5, the EMS 302 may modify the existing performance alarm based on the alarm modification request. At step 400-7, the EMS 302 may transmit an alarm modification response to the SON server 108. When the alarm modification request is for modification of the alarm configuration parameters for the existing performance alarm, the alarm modification response may be indicative of successful modification of the performance alarm. On the other hand, when the alarm modification request is for deletion of the existing performance alarm, the alarm modification response may be indicative of successful deletion of the performance alarm.

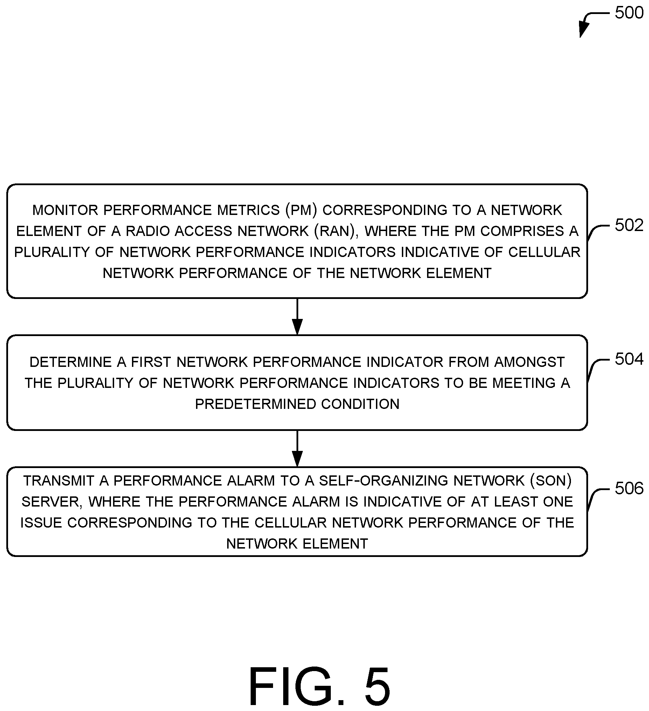

Fig. 5 illustrates a method for facilitating optimization of cellular network performance of network elements, in accordance with an example of the present subject matter. Although the method 500 may be implemented in a variety of devices, but for the ease of explanation, the description of the method 500 is provided in reference to the above-described network element 104. The order in which the method 500 is described is not intended to be construed as a limitation, and any number of the described method blocks may be combined in any order to implement the method 500, or an alternative method.

It may be understood that blocks of the method 500 may be performed in the network element 104. The blocks of the method 500 may be executed based on instructions stored in a non-transitory computer-readable medium, as will be readily understood. The non-transitory computer-readable medium may comprise, for example, digital memories, magnetic storage media, such as magnetic disks and magnetic tapes, hard drives, or optically readable digital data storage media.

At block 502, PM corresponding to a network element of a RAN are monitored. The PM may include a plurality of network performance indicators indicative of cellular network performance of the network element. Further, each of the plurality of network performance indicators may be derived based on one or more performance counters corresponding to the network element.

At block 504, it may be determined a first network performance indicator from amongst the plurality of network performance indicators is meeting a predetermined condition. To determine that the first network performance indicator meets the predetermined condition, one or more performance counters corresponding to the first network performance indicator may be identified and the first network performance indicator may be derived based on the one or more counters.

At block 506, a performance alarm may be transmitted to the SON server, where the performance alarm is indicative of at least one issue corresponding to the cellular network performance of the network element. In an example, the performance alarm may include an alarm ID corresponding to the performance alarm. In the example, the performance alarm may further include the last 'n' values of the one or more performance counters corresponding to the first network performance indicator.

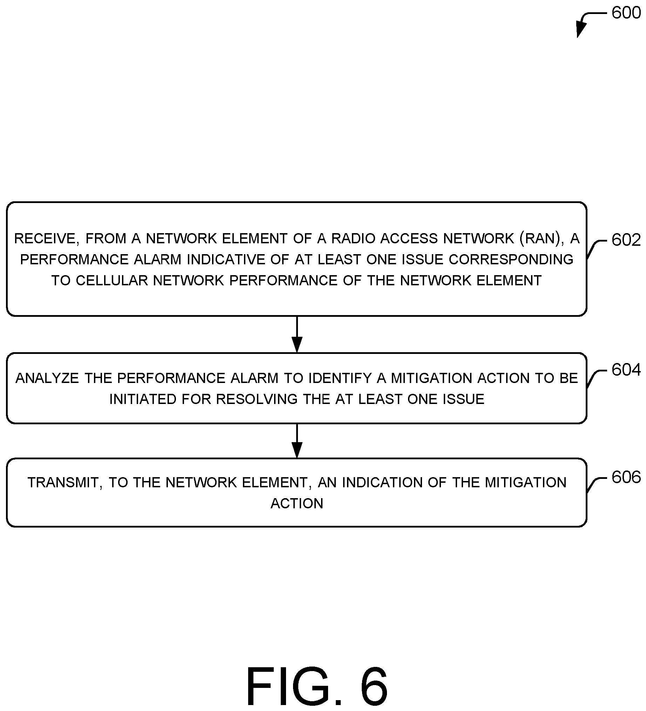

In an example, the performance alarm may then be analyzed at the SON server to identify a first mitigation action for resolving the at least one issue. In the example, a first indication of the first mitigation action may then be received at the network element. The manner in which the SON server identifies the first mitigation action is described in conjunction with Fig. 6.

Fig. 6 illustrates a method for facilitating optimization of cellular network performance of network elements, in accordance with another example of the present subject matter. Although the method 600 may be implemented in a variety of devices, but for the ease of explanation, the description of the method 600 is provided in reference to the above-described SON server 108. The order in which the method 600 is described is not intended to be construed as a limitation, and any number of the described method blocks may be combined in any order to implement the method 600, or an alternative method.

It may be understood that blocks of the method 600 may be performed in the SON server 108. The blocks of the method 600 may be executed based on instructions stored in a non-transitory computer-readable medium, as will be readily understood. The non-transitory computer-readable medium may comprise, for example, digital memories, magnetic storage media, such as magnetic disks and magnetic tapes, hard drives, or optically readable digital data storage media.

At block 602, a performance alarm may be received from a network element of a RAN. In an example, the performance alarm may be indicative of at least one issue corresponding to the cellular network performance of the network element. The cellular network performance of the network element may be indicated by a plurality of network performance indicators corresponding to the network element. Further, the at least one issue corresponding to the cellular network performance may correspond to a first network performance indicator from the plurality of network performance indicators.

In an example, the performance alarm may include the alarm ID corresponding to the performance alarm. In the example, the performance alarm may further include the last 'n' values of one or more performance counters.

At block 604, the performance alarm may be analyzed to identify a first mitigation action to be initiated for resolving the at least one issue. In an example, to resolve the at least one issue, an issue resolution data structure may be queried using the alarm ID corresponding to the performance alarm and the last 'n' values of the one or more performance counters. The issue resolution data structure may include alarm IDs corresponding to a plurality of performance alarms and a plurality of mitigation actions to be initiated in response to each of the plurality of performance alarms. Further, for each performance alarm, the issue resolution data structure may also classify a first mitigation action from the plurality of mitigation actions that is to be initiated in response to a performance alarm based on the last 'n' values of the one or more performance counters.

At block 606, a first indication of the performance alarm may be transmitted to the network element. In an example, the network element may initiate the first mitigation action to resolve the at least one issue.

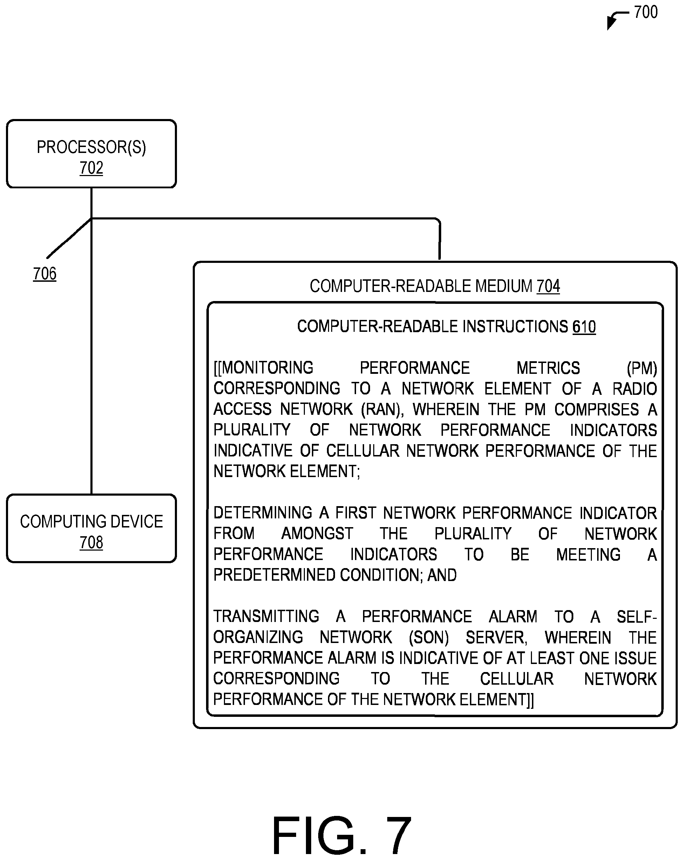

Fig. 7 illustrates a non-transitory computer-readable medium for facilitating optimization of cellular network performance of the network element, in accordance with an example of the present subject matter.

In an example, the computing environment 700 comprises processor 702 communicatively coupled to a non-transitory computer readable medium 704 through communication link 706. In an example, the computing environment 700 may be for example, the network element 104. In an example, the processor 702 may have one or more processing resources for fetching and executing computer-readable instructions from the non-transitory computer readable medium 704. The processor 702 and the non-transitory computer readable medium 704 may be implemented, for example, in the network element 104.

The non-transitory computer readable medium 704 may be, for example, an internal memory device or an external memory. In an example, the communication link 706 may be a network communication link, or other communication links, such as a PCI (Peripheral component interconnect) Express, USB-C (Universal Serial Bus Type-C) interfaces, I2C (Inter-Integrated Circuit) interfaces, etc. In an example, the non-transitory computer readable medium 704 comprises a set of computer readable instructions 710 which may be accessed by the processor 702 through the communication link 706 and subsequently executed for facilitating optimization of cellular network performance of the network element. The processor(s) 702 and the non-transitory computer readable medium 704 may also be communicatively coupled to a computing device 708 over the network.

Referring to Fig. 6, in an example, the non-transitory computer readable medium 704 comprises computer readable instructions 710 that cause the processor 702 to monitor PM corresponding to a network element of a RAN, where the PM comprises a plurality of network performance indicators indicative of cellular network performance of the network element. In an example, each of the plurality of network performance indicators may be derived based on one or more performance counters corresponding to the network element.

In an example, the instructions 710 may then cause the processor 702 to determine that a first network performance indicator from amongst the plurality of network performance indicators is meeting a predetermined condition. To determine that the first network performance indicator meets the predetermined condition, the instructions 710 may cause the processor 702 to identify one or more performance counters corresponding to the first network performance indicator and derive the first network performance indicator based on the one or more counters.

The instructions 710 may then cause the processor 702 to transmit a performance alarm to the SON server, where the performance alarm is indicative of at least one issue corresponding to the cellular network performance of the network element. In an example, the performance alarm may include an alarm ID corresponding to the performance alarm. In the example, the performance alarm may further include the last 'n' values of the one or more performance counters corresponding to the first network performance indicator.

In an example, the performance alarm may then be analyzed at the SON server to identify a first mitigation action for resolving the at least one issue. In the example, the instructions 710 may then cause the processor 702 to receive a first indication of the first mitigation action at the network element and initiate the first mitigation action to resolve the at least one issue. Once the at least one issue is resolved, the instructions 710 may then cause the processor 702 to transmit an alarm clear indication to the SON server, where the alarm clear indication is indicative of successful mitigation of the at least one issue.

In an example, the instructions 710 may then cause the processor 702 to receive a second indication to roll back the first mitigation action, where the rollback of the first mitigation action may include reversal of a parameter change that may have been initiated as a part of the first mitigation action.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. A method comprising:
monitoring (502) Performance Metrics (PM) corresponding to a network element of a Radio Access Network (RAN), wherein the PM comprises a plurality of network performance indicators indicative of cellular network performance of the network element;
determining (504) a first network performance indicator from amongst the plurality of network performance indicators to be meeting a predetermined condition; and
transmitting (506) a performance alarm to a Self-Organizing Network (SON) server, wherein the performance alarm is indicative of at least one issue corresponding to the cellular network performance of the network element.

2. The method as claimed in claim 1, wherein the method further comprises:
receiving, from the SON server, a first indication to initiate a first mitigation action at the network element in response to the at least one issue;
initiating the first mitigation action in response to the at least one issue;
determining that the at least one issue is resolved; and
transmitting an alarm clear indication to the SON server, wherein the alarm clear indication is indicative of successful mitigation of the at least one issue.

3. The method as claimed in claim 2, wherein the method further comprises receiving a second indication to roll back the first mitigation action.

4. The method as claimed in claim 1, 2 or 3, wherein the method further comprises:
receiving, from the SON server, a first indication to initiate a first mitigation action at the network element in response to the at least one issue;
initiating the first mitigation action in response to the at least one issue;
determining that the at least one issue is not resolved;
transmitting a partial alarm clear indication to the SON server, wherein the partial alarm clear indication is indicative of partial mitigation of the at least one issue; and
receiving a third indication to initiate a second mitigation action in response to the at least one issue.

5. The method as claimed in claim 1, 2, 3 or 4, wherein the method comprises configuring the performance alarm prior to monitoring the PM corresponding to the network element, wherein the configuring the performance alarm comprises:
receiving an alarm configuration request at the network element, wherein the alarm configuration request is to configure the network element to transmit the performance alarm upon determining the first network performance indicator to be meeting a predetermined condition, and wherein the alarm configuration request comprises alarm configuration parameters for configuring the performance alarm;
configuring the network element to transmit the performance alarm based on the alarm configuration request; and
transmitting, to the SON server, an alarm configuration response comprising an alarm ID corresponding to the performance alarm.

6. The method as claimed in claim 5, wherein the method comprises:
analyzing at least one performance counter corresponding to the first network performance indicator to determine that the first network performance indicator is meeting the predetermined condition, and
wherein the alarm configuration parameters comprises at least one of a name of the performance alarm, identifiers of the at least one performance counter, first alarm criteria to be monitored against the at least one performance counter to trigger the performance alarm, an evaluation duration indicating the duration for which the first alarm criteria is to be monitored, a second alarm criteria to be monitored against the at least one performance counter to clear the performance alarm, a frequency for reporting the performance alarm, a first schedule indicating a period for monitoring at least one of the first alarm criteria and the second alarm criteria, and an alarm type indicating criticality of the performance alarm.

7. A method comprising:
receiving (602), from a network element of a Radio Access Network (RAN), a performance alarm indicative of at least one issue corresponding to cellular network performance of the network element;
analyzing (604) the performance alarm to identify a first mitigation action to be initiated for resolving the at least one issue; and
transmitting (606), to the network element, a first indication of the first mitigation action.

8. The method as claimed in claim 7, wherein the method further comprises:
receiving an alarm clear indication from the network element, wherein the alarm clear indication is indicative of successful mitigation of the at least one issue; and
transmitting, to the network element, a second indication to roll back the first mitigation action.

9. The method as claimed in claim 7 or 8, wherein the method further comprises:
receiving a partial alarm clear indication from the network element, wherein the partial alarm clear indication is indicative of partial mitigation of the at least one issue; and
transmitting, to the network element, a third indication of a second mitigation action to be initiated for resolving the at least one issue.

10. The method as claimed in claim 7, 8 or 9, wherein the method comprises configuring the performance alarm prior to receiving the performance alarm, wherein configuring the performance alarm comprises:
transmitting, to the network element, an alarm configuration request to configure the network element to raise the performance alarm upon detecting that a first network performance indicator from a plurality of network performance indicators corresponding to the network element is meeting a predetermined condition and comprises alarm configuration parameters for setting up the performance alarm, wherein the plurality of network performance indicators is indicative of the cellular network performance of the network element; and
receiving, from the network element, an alarm configuration response comprising an alarm ID corresponding to the performance alarm configured at the network element.

11. A network element (102, 104, 700) comprising:
at least one processor (112, 702) and at least one memory (202, 704) storing instructions (114, 610) that, when executed by the at least one processor, cause the network element at least to:
monitor (502) Performance Metrics (PM) corresponding to a network element of a Radio Access Network (RAN), wherein the PM comprises a plurality of network performance indicators indicative of cellular network performance of the network element;
determine (504) a first network performance indicator from amongst the plurality of network performance indicators to be meeting a predetermined condition; and
transmit (506) a performance alarm to a Self-Organizing Network (SON) server, wherein the performance alarm is indicative of at least one issue corresponding to the cellular network performance of the network element.

12. The network element (102, 104, 700) as claimed in claim 11, wherein the at least one processor (112, 702) further causes the network element to:
receive, from the SON server, a first indication to initiate a first mitigation action at the network element in response to the at least one issue;
initiate the first mitigation action in response to the at least one issue;
determine that the at least one issue is resolved; and
transmit an alarm clear indication to the SON server, wherein the alarm clear indication is indicative of successful mitigation of the at least one issue.

13. The network element (102, 104, 700) as claimed in claim 12, wherein the at least one processor (112, 702) causes the network element to receive a second indication to roll back the first mitigation action.

14. The network element (102, 104, 700) as claimed in claim 11, 12 or 13 wherein the at least one processor further causes the network element to:
receive, from the SON server, a first indication to initiate a first mitigation action at the network element in response to the at least one issue;
initiate the first mitigation action in response to the at least one issue;
determine that the at least one issue is not resolved;
transmit a partial alarm clear indication to the SON server, wherein the partial alarm clear indication is indicative of partial mitigation of the at least one issue; and
receive a third indication to initiate a second mitigation action in response to the at least one issue.

15. The network element (102, 104, 700) as claimed in claim 11, 12, 13 or 14, wherein the at least one processor (112, 702) causes the network element to configure the performance alarm prior to monitoring the PM corresponding to the network element, and wherein to configure the performance alarm, the at least one processor (112, 702) further causes the network element to:
receive an alarm configuration request at the network element, wherein the alarm configuration request is to configure the network element to transmit the performance alarm upon determining the first network performance indicator meeting a predetermined condition, and wherein the alarm configuration request comprises alarm configuration parameters for configuring the performance alarm;
configure the network element to transmit the performance alarm based on the alarm configuration request; and
transmit, to the SON server, an alarm configuration response comprising an alarm ID corresponding to the performance alarm.

16. The network element (102, 104, 700) as claimed in claim 15, wherein the at least one processor (112, 702) causes the network element to:
analyze at least one performance counter corresponding to the first network performance indicator to determine that the first network indicator is meeting the predetermined condition, and
wherein the alarm configuration parameters comprises at least one of a name of the performance alarm, identifiers of at least one performance counter, first alarm criteria to be monitored against the at least one performance counter to trigger the performance alarm, an evaluation duration indicating the duration for which the first alarm criteria is to be monitored, a second alarm criteria to be monitored against the at least one performance counter to clear the performance alarm, a frequency for reporting the performance alarm, a first schedule indicating a period for monitoring at least one of the first alarm criteria and the second alarm criteria, and an alarm type indicating criticality of the performance alarm.
